# EUROPEAN PATENT APPLICATION

(11) **EP 4 310 958 A1**
(43) Date of publication of application: **24.01.2024**
(21) Application number: 21932101.5
(22) Date of filing: 24.03.2021
(51) Int. Cl.: H01M 4/62, H01M 10/052, C08F 220/06, C08F 220/44, C08F 120/58

(54) **BINDER AND ELECTROCHEMICAL DEVICE COMPRISING SAME**

(71) Applicant: Ningde Amperex Technology Limited, Ningde, Fujian 352100 (CN)
(72) Inventor: HU, Chengxin, Ningde, Fujian 352100 (CN); LI, Yajie, Ningde, Fujian 352100 (CN)
(74) Representative: Icosa
(86) International application number: PCT/CN2021/082559
(87) International publication number: WO 2022/198472

(57) **Abstract**

A binder and an electrochemical apparatus including such binder are disclosed, where the binder is a polymer including structural units represented by a formula I, a formula II, and a formula III. R₁ is selected from any one of a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group; R₂ is selected from a phenolic hydroxyl group and the number of phenolic hydroxyl groups is 2 to 5; R₃ is one of C, S, N, or P; X is selected from any one of Li, Na, or K; R₄ and R₅ each are independently selected from one of a hydrogen atom, a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group; and n1, n2, and n3 each are independently an integer greater than zero. The binder in this application provides large bonding force and helps with the desolvation of lithium ions, thus alleviating the obstruction against intercalation of lithium ions, and improving kinetic performance of the electrochemical apparatus.

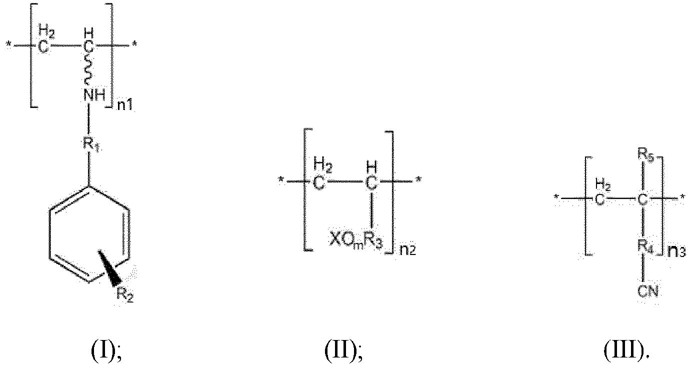

## Description

### TECHNICAL FIELD

This application relates to the field of secondary batteries, and specifically, to a binder and an electrochemical apparatus including such binder.

### BACKGROUND

Currently, binders for lithium-ion batteries implement a bonding effect in electrode plates. As binders do not participate in the deintercalation and intercalation of lithium ions between main materials, the least possible use is desired. However, a decrease in the amount of binder used inevitably leads to a decrease in the bonding effect, causing peeling of an active main material layer off a current collector. In addition, some alloy-type main material particles (for example, silicon) change greatly in volume during deintercalation and intercalation of lithium ions, and the binder with a low bonding effect cannot withstand stress caused by the great volumetric deformation, which causes bonding failure between particles and unrestricted slip of the particles, shortening cycle life of the battery cell and leading to continuous thickness increase over cycling.

Conventional binders cover the complete surface of particles, which obstructs intercalation of lithium ions, causing poor kinetic performance of the lithium battery in charging and discharging.

### SUMMARY

In view of this, this application provides a binder and an electrochemical apparatus including such binder, where the binder provides large bonding force and helps with the desolvation of lithium ions, thus alleviating the obstruction against intercalation of lithium ions, and improving kinetic performance of the electrochemical apparatus.

According to a first aspect, this application provides a binder, where the binder is a polymer including structural units represented by a formula I, a formula II, and a formula III: 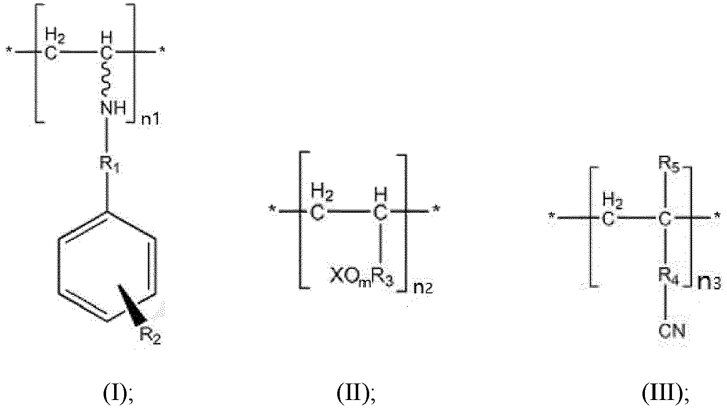
where R₁ is independently selected from any one of a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group;
R₂ is selected from a phenolic hydroxyl group and the number of phenolic hydroxyl groups is 2 to 5;
R₃ is selected from any one of C, S, N, or P; and X is selected from any one of Li, Na, or K;
R₄ and R₅ each are independently selected from any one of a hydrogen atom, a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group; and
n1, n2, and n3 each are independently an integer greater than zero.

With reference to the first aspect, in a possible embodiment, R₂ in the structural unit represented by the formula I is selected from any one of the following groups: 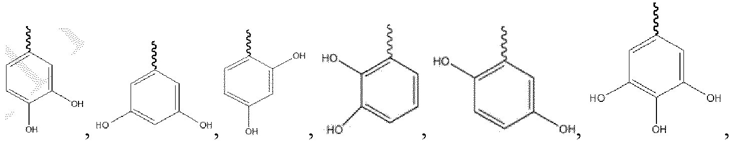 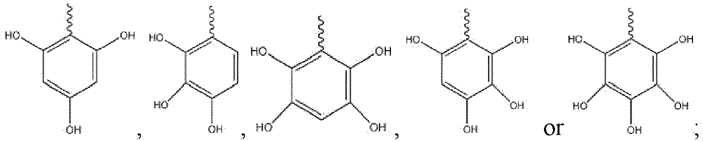 where 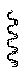 represents a binding site for an adjacent atom.

With reference to the first aspect, in a possible embodiment,
a molar fraction of the structural unit represented by the formula I in the binder is 5mol% to 30mol%;
a molar fraction of the structural unit represented by the formula II in the binder is 10mol% to 60mol%; and
a molar fraction of the structural unit represented by the formula III in the binder is 35mol% to 55mol%.

With reference to the first aspect, in a possible embodiment, the binder further includes a functional monomer with a mass fraction of 0wt% to 1wt%, and the functional monomer includes at least one of an acrylamide derivative monomer or an acrylic derivative monomer.

With reference to the first aspect, in a possible embodiment, the acrylamide derivative monomer includes at least one of acrylamide, N-methacrylamide, N-ethylacrylamide, N-butylacrylamide, or N,N'-methylenebisacrylamide.

With reference to the first aspect, in a possible embodiment, the acrylic derivative monomer includes at least one of methyl acrylate, ethyl acrylate, n-butyl acrylate, tert-butyl acrylate, 2-ethylhexyl acrylate ester, cyclohexyl acrylate, isobornyl acrylate, hydroxyethyl acrylate, hydroxypropyl acrylate, vinyl acetate, methyl methacrylate, ethyl methacrylate, n-butyl methacrylate, 2-ethylhexyl methacrylate, cyclohexyl methacrylate, isobornyl methacrylate, hydroxyethyl methacrylate, hydroxypropyl methacrylate, glycidyl methacrylate, or poly(ethylene glycol) diacrylate.

With reference to the first aspect, in a possible embodiment, pH of the binder is 3 to 12.

With reference to the first aspect, in a possible embodiment, the binder satisfies at least one of the following characteristics a to c:
a: glass transition temperature of the binder is 80°C to 200°C;
b: when a solid content of the binder is 4%, viscosity of the binder is 1000 mPa•s to 20000 mPa•s; and
c: relative molecular mass of the binder is in the range of 1000 to 5 million.

With reference to the first aspect, in a possible embodiment, the binder further includes a solvent and the solvent is an organic solvent or water.

With reference to the first aspect, in a possible embodiment, the binder further includes an additive and the additive includes at least one of a dispersing agent, a leveling agent, a wetting agent, a defoaming agent, or a softening agent.

With reference to the first aspect, in a possible embodiment, the binder is applied to a negative electrode and/or a positive electrode of the lithium-ion battery.

According to a second aspect, an embodiment of this application provides an electrochemical apparatus, including a positive electrode plate, a negative electrode plate, a separator, and an electrolyte, where at least one of the positive electrode plate, the negative electrode plate, or the separator includes the binder of the first aspect.

With reference to the second aspect, in a possible embodiment, the negative electrode plate includes a negative electrode current collector and a negative electrode active substance layer, and a mass fraction of the binder in the negative electrode active substance layer is 3.0wt% to 6.0wt%.

Compared with the prior art, this application has at least the following beneficial effects:

In the binder provided in this application, the benzene ring structure can form ππ conjugation force with graphite, the phenolic hydroxyl group and cyano group can form a strong polar force with the metal current collector, and the salinized anionic group can support migration of more lithium ions and also compete with the solvent around lithium ions to help with the desolvation of lithium ions, thus alleviating the obstruction against intercalation of lithium ions, and improving kinetic performance of the electrochemical apparatus.

### BRIEF DESCRIPTION OF DRAWINGS

FIG. 1a is a schematic diagram of a bonding force test for a binder in Example 3 of this application;
FIG. 1b is a schematic diagram of a bonding force test for a binder in Comparative Example 1 of this application; and
FIG. 2 is a schematic diagram of charging and discharging test results of batteries in Example 3 and Comparative Example 1 of this application.

### DESCRIPTION OF EMBODIMENTS

The following descriptions are preferred implementations of embodiments of this application. It should be noted that a person of ordinary skill in the technical field may make several improvements and refinements without departing from the principle of the embodiments of this application, and these improvements and refinements shall also fall within the protection scope of the embodiments of this application.

For simplicity, only some numerical ranges are explicitly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the description of this specification, it should be noted that, unless otherwise stated, "more than" and "less than" are inclusive of the present number, and "more" in "one or more" means more than two.

The above content of this application is not intended to describe each disclosed embodiment or each implementation in this application. The following description illustrates exemplary embodiments in more detail using examples. Throughout this application, guidance is provided by using a series of embodiments, and these embodiments may be used in various combinations. In the examples, enumeration is merely representative and should not be interpreted as exhaustive.

According to a first aspect, an embodiment of this application provides a binder, where the binder has a structure represented by a formula A:

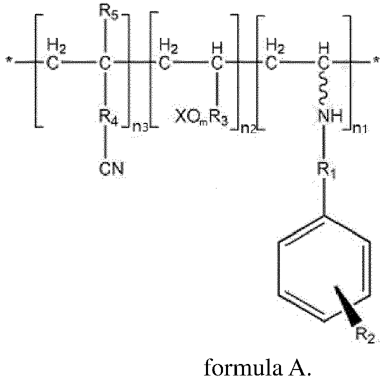

Specifically, the binder is a polymer including structural units represented by a formula I, a formula II, and a formula III: 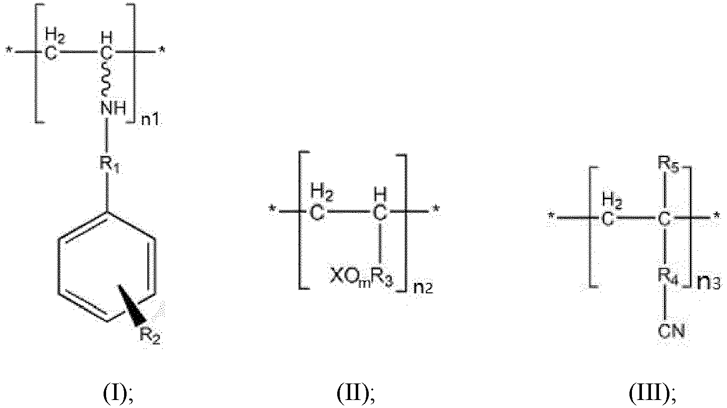
where R₁ is independently selected from any one of a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group;
R₂ is selected from a phenolic hydroxyl group and the number of phenolic hydroxyl groups is 2 to 5;
R₃ is selected from any one of C, S, N, or P; and X is selected from any one of Li, Na, or K;
R₄ and R₅ each are independently selected from any one of a hydrogen atom, a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group; and
n1, n2, and n3 each are independently an integer greater than zero.

In the binder provided in this application, the benzene ring structure can form ππ conjugation force with graphite, the phenolic hydroxyl group and cyano group can form a strong polar force with the metal current collector, and the salinized anionic group can support the migration of more lithium ions and also compete with the solvent around lithium ions to help with the desolvation of lithium ions, thus alleviating the obstruction against intercalation of lithium ions, and improving kinetic performance of the electrochemical apparatus.

Optionally, the C₁-C₁₀ alkyl group may be a chain alkyl group or a cyclic alkyl group, and the chain alkyl group may be a linear alkyl group or a branched chain alkyl group. Hydrogen on a ring of the cyclic alkyl group may be further replaced by an alkyl group. A preferred lower limit of the number of carbon atoms in the C₁-C₁₀ alkyl group is 1, 2, 3, or 4, and a preferred upper limit is 5, 6, 8, or 10. Examples of the C₁-C₁₀ alkyl group may specifically include a methyl group, an ethyl group, an n-propyl group, isopropyl group, an n-butyl group, an isobutyl group, a sec-butyl group, a tert-butyl group, an n-pentyl group, an isopentyl group, a neopentyl group, a hexyl group, a 2-methyl-pentyl group, a 3-methyl-pentyl group, a 1,1,2-trimethyl-propyl group, a 3,3-dimethyl-butyl group, a heptyl group, a 2-heptyl group, a 3-heptyl group, a 2-methylhexyl group, a 3-methylhexyl group, an isoheptyl group, an octyl group, a nonyl group, and a decyl group.

When the aforementioned C₁-C₁₀ alkyl group contains oxygen atoms, the C₁-C₁₀ alkyl group may be a C₁-C₁₀ alkoxy group. Preferably, a C₁-C₆ alkoxy group is selected; and more preferably, a C₁-C₄ alkoxy group is selected. Examples of the C₁-C₁₀ alkoxy group may specifically include a methoxy group, an ethoxy group, an n-propoxy group, an isopropoxy group, an n-butoxy group, a sec-butoxy group, a t-butoxy group, an n-pentyloxy group, an isopentyloxy group, a cyclopentyloxy group, and a cyclohexyloxy group.

The C₂-C₁₀ alkenyl group may be a cyclic alkenyl group or a chain alkenyl group, and the chain alkenyl group may be a linear alkenyl group or a branched alkenyl group. In addition, preferably, the number of double bonds in the C₂-C₁₀ alkenyl group is 1. A preferred lower limit of the number of carbon atoms in the C₂-C₁₀ alkenyl group is 2, 3, 4, or 5, and a preferred upper limit is 3, 4, 5, 6, 8, or 10. Preferably, a C₂-C₆ alkenyl group is selected; and more preferably, a C₂-C₅ alkenyl group is selected. Examples of the C₂-C₁₀ alkenyl group may specifically include a vinyl group, an allyl group, an isopropenyl group, a pentenyl group, a cyclohexenyl group, a cycloheptenyl group, and a cyclooctenyl group.

The C₂-C₁₀ alkynyl group may be a cyclic alkynyl group or a chain alkynyl group, and the chain alkynyl group may be a linear alkynyl group or a branched alkynyl group. In addition, preferably, the number of triple bonds in the C₂-C₁₀ alkynyl group is 1. A preferred lower limit of the number of carbon atoms in the C₂-C₁₀ alkynyl group is 2, 3, 4, or 5, and a preferred upper limit is 3, 4, 5, 6, 8, or 10. Examples of the C₂-C₁₀ alkynyl group may specifically include an ethynyl group, a propargyl group, an isopropynyl group, a pentynyl group, a cyclohexynyl group, and a cycloheptynyl group.

The C₆-C₂₀ aryl group may be a phenyl group, a phenylalkyl group, a biphenyl group, or a fused ring aromatic hydrocarbon group (for example, a naphthyl group, an anthracenyl group, or a phenanthrenyl group). The biphenyl group and the fused ring aromatic hydrocarbon group may be further replaced with an alkyl group or an alkenyl group. Examples of the C₆-C₂₀ aryl group may specifically include a phenyl group, a benzyl group, a biphenyl group, a p-tolyl group, an o-tolyl group, an m-tolyl group, and a naphthyl group.

The substituent group is selected from one or more of halogen atoms. Preferably, the substituent group is selected from a fluorine atom, a chlorine atom, and a bromine atom.

In an optional technical solution of this application, the structural unit represented by the formula I is a structure including a phenolic hydroxyl group, where R₂ is selected from a phenolic hydroxyl group and the number of phenolic hydroxyl groups is 2 to 5. Optionally, R₂ is selected from any one of the following groups: 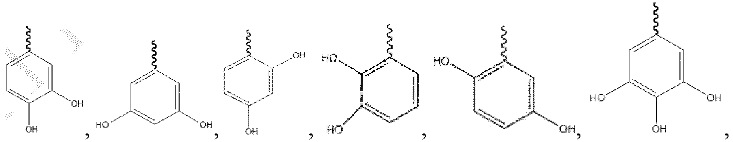 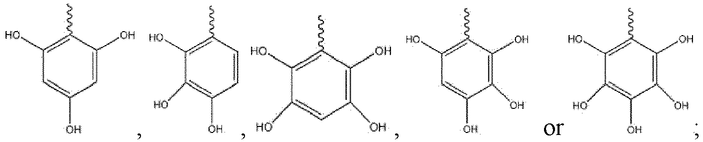 where 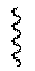 represents a binding site with an adjacent atom.

In an optional technical solution of this application, a molar fraction of the structural unit represented by the formula I in the binder is 5mol% to 30mol%, or may specifically be 5mol%, 7mol%, 9mol%, 10mol%, 12mol%, 15mol%, 18mol%, 20mol%, 25mol%, 28mol%, or 30mol%, or certainly may be another value within the foregoing range, which is not limited herein. It can be understood that when the molar fraction of the structural unit represented by the formula I is lower than 5mol% or higher than 30mol%, viscosity of the binder decreases, and the negative electrode active material or the positive electrode active material is easy to fall off the current collector during cycling of the battery, and therefore, a capacity retention rate of the battery decreases. Preferably, the molar fraction of the structural unit represented by the formula I in the binder is 10mol% to 25mol%; and more preferably, the molar fraction of the structural unit represented by the formula I in the binder is 15mol% to 20mol%.

In an optional technical solution of this application, the structural unit represented by the formula II is an XOₘR₃ structure including an anionic group, where R₃ may be any one of C, S, N, or P element; and the number m of oxygen atoms may be 1, 2, 3, or 4, and X may be Li, Na, or K element. Preferably, the anionic group may be lithium carboxylate, lithium sulfonate, lithium phosphate, or the like. It can be understood that the anionic group can carry more lithium ions, increasing the number of migrated lithium ions, and also compete with the solvent around lithium ions to help with the desolvation of lithium ions, thus alleviating the obstruction against intercalation of lithium ions, and improving kinetic performance of the electrochemical apparatus.

In an optional technical solution of this application, a molar fraction of the structural unit represented by the formula II in the binder is 10mol% to 60mol%, or may specifically be 10mol%, 15mol%, 20mol%, 25mol%, 30mol%, 35mol%, 40mol%, 45mol%, 50mol%, 55mol%, or 60mol%, or certainly may be another value within the foregoing range, which is not limited herein. It can be understood that with the increase in the number of the structural units represented by the formula II in the binder, that is, the number of salinized anionic groups in the binder, the binder can provide more lithium ions during cycling of the battery, and also compete with the solvent around lithium ions to help with the desolvation of lithium ions, thus alleviating the obstruction against intercalation of lithium ions, and improving kinetic performance of the electrochemical apparatus. Preferably, the molar fraction of the structural unit represented by the formula II in the binder is 15mol% to 45mol%; and more preferably, the molar fraction of the structural unit represented by the formula II in the binder is 20mol% to 30mol%.

In an optional technical solution of this application, the structural unit represented by the formula III is a structure including a cyano group, and the structural unit represented by the formula III is selected from at least one of the following structural units:

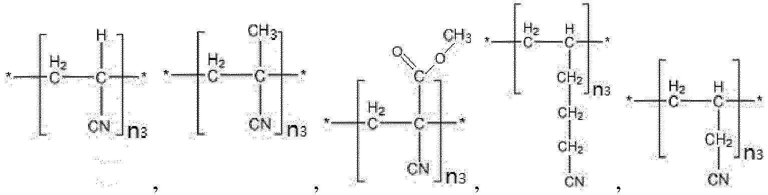

In an optional technical solution of this application, a molar fraction of the structural unit represented by the formula III in the binder is 35mol% to 55mol%, or may specifically be 35mol%, 40mol%, 45mol%, 50mol%, or 55mol%, or certainly may be another value within the foregoing range, which is not limited herein. It can be understood that with the increase in the number of the structural units represented by the formula III in the binder, that is, the number of cyano groups in the binder is increased, viscosity of the binder is gradually increased, and structural stability of the active material layer on the current collector is increased, which can increase the capacity retention rate of the battery. However, when the molar fraction of the structural unit represented by the formula III in the binder is greater than 60mol%, the binder has excessively high viscosity and is insoluble in water, thereby reducing convenience of the binder in use. Preferably, the molar fraction of the structural unit represented by the formula III in the binder is 40mol% to 55mol%; and more preferably, the molar fraction of the structural unit represented by the formula III in the binder is 50mol% to 55mol%.

In an optional technical solution of this application, the binder further includes a functional monomer with a mass fraction of 0wt% to 1wt%, and the functional monomer includes at least one of an acrylamide derivative monomer or an acrylic derivative monomer. The functional monomer can improve the mechanical performance of the binder, and improve the solvent resistance, water resistance, gloss and color retention, and acid and alkali resistance of the binder.

In an optional technical solution of this application, the acrylamide derivative monomer includes at least one of acrylamide, N-methacrylamide, N-ethylacrylamide, N-butylacrylamide, or N,N'-methylenebisacrylamide.

In an optional technical solution of this application, the acrylic derivative monomer includes at least one of methyl acrylate, ethyl acrylate, n-butyl acrylate, tert-butyl acrylate, 2-ethylhexyl acrylate ester, cyclohexyl acrylate, isobornyl acrylate, hydroxyethyl acrylate, hydroxypropyl acrylate, vinyl acetate, methyl methacrylate, ethyl methacrylate, n-butyl methacrylate, 2-ethylhexyl methacrylate, cyclohexyl methacrylate, isobornyl methacrylate, hydroxyethyl methacrylate, hydroxypropyl methacrylate, glycidyl methacrylate, or poly(ethylene glycol) diacrylate.

In an optional technical solution of this application, pH of the binder is 3 to 12, or may specifically be 3, 4, 5, 6, 7, 8, 9, 10, 11, or 12, or certainly may be another value within the foregoing range, which is not limited herein. Preferably, pH of the binder is 6 to 10.

In an optional technical solution of this application, glass transition temperature of the binder is 80°C to 200°C, and may specifically be 80°C, 90°C, 100°C, 110°C, 120°C, 140°C, 150°C, 160°C, 180°C, or 200°C, or certainly may be another value within the foregoing range, which is not limited herein. If the glass transition temperature of the binder is excessively high, the binder is hard and brittle, and the electrode plate falls off under cold-pressing; or if the glass transition temperature of the binder is excessively low, the binder is rubbery at room temperature, and it is difficult to maintain a bonding effect of material particles in the electrode plate.

In an optional technical solution of this application, when a solid content of the binder is 4%, viscosity of the binder is 1000 mPa•s to 20000 mPa•s, or may specifically be 1000mPa•s, 3000mPa•s, 5000mPa•s, 8000mPa•s, 10000mPa•s, 13000mPa•s, 15000mPa•s, 18000mPa•s, or 20000mPa•s, or certainly may be another value within the foregoing range, which is not limited herein. Monomer component adjustment affects the viscosity of the binder, and the viscosity affects slurry stirring and coating processes. If the viscosity is excessively high, stirring consumes large power, and the slurry is difficult to level during the coating process; or if the viscosity is excessively small, the slurry has good fluidity during coating. Difficult leveling and excessive fluidity causes coating variation, and serious fluctuation in coating weight causes the electrode plate to be unable to be used normally.

In an optional technical solution of this application, the relative molecular mass of the binder is in the range of 1000 to 5 million, and may specifically be 1000, 5000, 10000, 100000, 500000, 1 million, 3 million, or 5 million, or certainly may be another value within the foregoing range, which is not limited herein. Relative molecular mass of the binder affects the viscosity of the binder, and the viscosity affects slurry stirring and coating processes. If the viscosity is excessively high, stirring consumes large power, and the slurry is difficult to level during the coating process; and if the viscosity is excessively small, the slurry has good fluidity during coating. Difficult leveling and excessive fluidity both cause coating variation, and serious fluctuation in coating weight causes the electrode plate to be unable to be used normally.

In an optional technical solution of this application, the binder further includes a solvent and the solvent is an organic solvent or water.

The present application also relates to a method for preparing the adhesive: The adhesive is prepared via emulsion polymerization of the structural monomer of the formula I, the structural monomer of the formula II, and the structural monomer of the formula III.

In an optional technical solution of this application, the binder further includes an additive and the additive includes at least one of a dispersing agent, a leveling agent, a wetting agent, a defoaming agent, or a softening agent.

In an optional technical solution of this application, the binder is applied to a negative electrode and/or a positive electrode of the lithium-ion battery.

According to a second aspect, an embodiment of this application further provides an electrochemical apparatus, including a positive electrode plate, a negative electrode plate, a separator, and an electrolyte, where at least one of the positive electrode plate, the negative electrode plate, or the separator includes the binder in the first aspect.

In an optional technical solution of this application, the negative electrode plate includes a negative electrode current collector and a negative electrode active substance layer, and a mass fraction of the binder in the negative electrode active substance layer is 3.0wt% to 6.0wt%, or preferably, 4.5wt% to 5.5wt%, and more preferably, 5wt%.

In an optional technical solution of this application, the foregoing positive electrode plate includes a positive electrode current collector and a positive electrode active material layer located on the positive electrode current collector.

In an optional technical solution of this application, the positive electrode active material includes at least one of lithium cobalt oxide (LiCoO₂), lithium nickel cobalt manganate ternary material, lithium iron phosphate, lithium manganese iron phosphate, or lithium manganate oxide.

In an optional technical solution of this application, the positive electrode current collector includes but is not limited to aluminum foil.

In an optional technical solution of this application, the negative electrode plate includes a negative electrode current collector and a negative electrode active material layer located on the negative electrode current collector.

In an optional technical solution of this application, the negative electrode active material includes at least one of a silicon negative electrode material, a silicon-oxygen negative electrode material, a silicon-carbon negative electrode material, and a graphite negative electrode material.

In an optional technical solution of this application, the negative electrode current collector includes, but is not limited to, copper foil, nickel foil, stainless steel foil, titanium foil, foamed nickel, foamed copper or a polymer base coated with conductive metal.

In an optional technical solution of this application, the electrochemical apparatus further includes an electrolyte, and the electrolyte includes an organic solvent, lithium salt, and an additive.

The organic solvent of the electrolyte according to this application may be any organic solvent known in the prior art which can be used as a solvent of the electrolyte. Electrolyte salt used in the electrolyte according to this application is not limited, and may be any electrolyte salt known in the prior art. The additive of the electrolyte according to this application may be any additive known in the prior art which can be used as an additive of the electrolyte.

In a specific embodiment, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate.

In a specific embodiment, the lithium salt includes at least one of an organic lithium salt or an inorganic lithium salt.

In a specific embodiment, the lithium salt includes, but is not limited to, lithium hexafluorophosphate (LiPF₆), lithium tetrafluoroborate (LiBF₄), lithium difluorophosphate (LiPO₂F₂), lithium bis(fluorosulfonyl)imide LiN(CF₃SO₂)₂ (LiTFSI), lithium bis(fluorosulfonyl)imide Li(N(SO₂F)₂)(LiFSI), lithium bis(oxalate)borate LiB(C₂O₄)₂(LiBOB), or lithium difluoro(oxalato)borate LiBF₂(C₂O₄) (LiDFOB).

In an optional technical solution of this application, the electrochemical apparatus in this application includes, but is not limited to, all kinds of primary batteries, secondary batteries, fuel cells, solar cells, or capacitors.

In a specific embodiment, the electrochemical apparatus is a lithium secondary battery, and the lithium secondary battery includes but is not limited to a lithium metal secondary battery, a lithium-ion secondary battery, a lithium polymer secondary battery, or a lithium-ion polymer secondary battery.

The following uses lithium-ion batteries as an example and describes the preparation of lithium-ion batteries with reference to specific examples.

Persons skilled in the art understand that the preparation method described in this application is only an example, and that all other suitable preparation methods fall within the scope of this application.

### I. Preparation of binder

1.5 parts of ammonium persulfate, 15 parts of deionized water, and 15 parts of acrylonitrile were mixed thoroughly, to obtain a solution A, and the solution A was stored at 2°C to 8°C until use.

30 parts of lithium acrylate, 40 parts of acrylonitrile, 15 parts of glycidyl methacrylate, and 235 parts of deionized water were added into a three-necked flask, and stirred evenly; a resulting mixture was heated to 70°C via a water bath, and argon gas was continuously pumped into the three-necked flask to exhaust air, and after the temperature in the three-necked flask rose to 70°C, the solution A was added dropwise at a speed of 0.125 mL/min, stirred at a stirring speed of 400 rpm and left to react for 6h, to obtain a colorless and transparent solution.

Finally, 15 parts of dopamine hydrochloride was added to the foregoing colorless transparent solution, and stirred at 100 rpm for 5 hours under protection of inert gas at 80°C, to obtain a binder after reaction, and relative molecular mass of the binder was in the range of 1000 to 5 million.

Proportional parameters of binders in Examples 1 to 33 (that is, S1 to S33 in the table) and binders in Comparative Examples 1 to 3 (that is, D1 to D3 in the table) prepared in the foregoing method are given in Table 1.

**Table 1**

| Sample | Monomer component of formula I | Molar fraction of structural unit of formula I (mol%) | Monomer component of formula III | Molar fraction of structural unit of formula III (mol%) | Monomer component of formula II | Molar fraction of structural unit of formula 11 (mol%) | Anionic group in structural unit of formula II | Functional monomer component + proportion (wt%) |
|---|---|---|---|---|---|---|---|---|
| S1 | Methacrylic acid-modified catechol structure | 5 | Acrylonitrile | 55 | Lithium acrylate | 30 | Lithium carboxylate | N,N'-methylenebisacrylamide 0.005 |
| S2 | Methacrylic acid-modified catechol structure | 10 | Acrylonitrile | 55 | Lithium acrylate | 30 | Lithium carboxylate | N,N'-methylenebisacrylamide 0.005 |
| S3 | Methacrylic acid-modified catechol structure | 15 | Acrylonitrile | 55 | Lithium acrylate | 30 | Lithium carboxylate | N,N'-methylenebisacrylamide 0.005 |
| S4 | Methacrylic acid-modified catechol structure | 20 | Acrylonitrile | 55 | Lithium acrylate | 30 | Lithium carboxylate | N,N'-methylenebisacrylamide 0.005 |
| S5 | Methacrylic acid-modified catechol structure | 25 | Acrylonitrile | 55 | Lithium acrylate | 30 | Lithium carboxylate | N,N'-methylenebisacrylamide 0.005 |
| S6 | Methacrylic acid-modified catechol structure | 30 | Acrylonitrile | 55 | Lithium acrylate | 30 | Lithium carboxylate | N,N'-methylenebisacrylamide 0.005 |
| S7 | Methacrylic acid-modified catechol structure | 15 | Acrylonitrile | 35 | Lithium acrylate | 30 | Lithium carboxylate | N,N'-methylenebisacrylamide 0.005 |
| S8 | Methacrylic acid-modified catechol structure | 15 | Acrylonitrile | 40 | Lithium acrylate | 30 | Lithium carboxylate | N,N'-methylenebisacrylamide 0.005 |
| S9 | Methacrylic acid-modified catechol structure | 15 | Acrylonitrile | 45 | Lithium acrylate | 30 | Lithium carboxylate | N,N'-methylenebisacrylamide 0.005 |
| S10 | Methacrylic acid-modified catechol structure | 15 | Acrylonitrile | 50 | Lithium acrylate | 30 | Lithium carboxylate | N,N'-methylenebisacrylamide 0.005 |
| S11 | Methacrylic acid-modified catechol structure | 15 | Acrylonitrile | 55 | Lithium acrylate | 10 | Lithium carboxylate | N,N'-methylenebisacrylamide 0.005 |
| S12 | Methacrylic acid-modified catechol structure | 15 | Acrylonitrile | 55 | Lithium acrylate | 15 | Lithium carboxylate | N,N'-methylenebisacrylamide 0.005 |
| S13 | Methacrylic acid-modified catechol structure | 15 | Acrylonitrile | 55 | Lithium acrylate | 20 | Lithium carboxylate | N,N'-methylenebisacrylamide 0.005 |
| S14 | Methacrylic acid-modified catechol structure | 15 | Acrylonitrile | 55 | Lithium acrylate | 25 | Lithium carboxylate | N,N'-methylenebisacrylamide 0.005 |
| S15 | Methacrylic acid-modified catechol structure | 15 | Acrylonitrile | 55 | Lithium acrylate | 45 | Lithium carboxylate | N,N'-methylenebisacrylamide 0.005 |
| S16 | Methacrylic acid-modified catechol structure | 15 | Acrylonitrile | 55 | Lithium acrylate | 60 | Lithium carboxylate | N,N'-methylenebisacrylamide 0.005 |
| S17 | Methacrylic acid-modified catechol structure | 15 | Acrylonitrile | 55 | Sodium acrylate | 30 | Sodium carboxylate | N,N'-methylenebisacrylamide 0.005 |
| S18 | Methacrylic acid-modified catechol structure | 15 | Acrylonitrile | 55 | Potassium acrylate | 30 | Potassium carboxylate | N,N'-methylenebisacrylamide 0.005 |
| S19 | Methacrylic acid-modified catechol structure | 15 | Acrylonitrile | 55 | Lithium acrylate | 30 | Lithium carboxylate | N,N'-methylenebisacrylamide 0.005 |
| S20 | Methacrylic acid-modified catechol structure | 15 | Acrylonitrile | 55 | Lithium acrylate | 30 | Lithium carboxylate | N,N'-methylenebisacrylamide 0.005 |
| S21 | Methacrylic acid-modified catechol structure | 15 | Acrylonitrile | 55 | Lithium acrylate | 30 | Lithium carboxylate | N,N'-methylenebisacrylamide 0.005 |
| S22 | Methacrylic acid-modified catechol structure | 15 | Acrylonitrile | 55 | Lithium acrylate | 30 | Lithium carboxylate | N,N'-methylenebisacrylamide 0.005 |
| S23 | Methacrylic acid-modified catechol structure | 15 | Acrylonitrile | 55 | Lithium acrylate | 30 | Lithium carboxylate | N,N'-methylenebisacrylamide 0.005 |
| S24 | Methacrylic acid-modified catechol structure | 15 | Acrylonitrile | 55 | Lithium acrylate | 30 | Lithium carboxylate | N,N'-methylenebisacrylamide 0.005 |
| S25 | Acrylic acid-modified catechol structure | 15 | Acrylonitrile | 55 | Lithium acrylate | 30 | Lithium carboxylate | N,N'-methylenebisacrylamide 0.005 |
| S26 | Methacrylic acid-modified benzenetriol structure | 15 | Acrylonitrile | 55 | Lithium acrylate | 30 | Lithium carboxylate | N,N'-methylenebisacrylamide 0.005 |
| S27 | Methacrylic acid-modified catechol structure | 15 | Methacrylonitrile | 55 | Lithium acrylate | 30 | Lithium carboxylate | N,N'-methylenebisacrylamide 0.005 |
| S28 | Methacrylic acid-modified catechol structure | 15 | 5-hexenenitrile | 55 | Lithium acrylate | 30 | Lithium carboxylate | N,N'-methylenebisacrylamide 0.005 |
| S29 | Methacrylic acid-modified catechol structure | 15 | Allyl cyanide | 55 | Lithium acrylate | 30 | Lithium carboxylate | N,N'-methylenebisacrylamide 0.005 |
| S30 | Methacrylic acid-modified catechol structure | 15 | Acrylonitrile | 55 | Lithium methacrylate | 30 | Lithium carboxylate | N,N'-methylenebisacrylamide 0.005 |
| S31 | Methacrylic acid-modified catechol structure | 15 | Acrylonitrile | 55 | 2-acrylamide-2-methylpropanesulfonic acid | 30 | Lithium sulfonate | N,N'-methylenebisacrylamide 0.005 |
| S32 | Methacrylic acid-modified catechol structure | 15 | Acrylonitrile | 55 | P-styrene sulfonic acid | 30 | Lithium sulfonate | N,N'-methylenebisacrylamide 0.005 |
| S33 | Methacrylic acid-modified catechol structure | 15 | Acrylonitrile | 55 | Lithium acrylate | 30 | Lithium carboxylate | Polyethylene glycol diacrylate-0.005 |
| D1 | / | / | Acrylonitrile | 55 | Lithium acrylate | 30 | Lithium carboxylate | N,N'-methylenebisacrylamide 0.005 |
| D2 | Methacrylic acid-modified catechol structure | 15 | / | / | Lithium acrylate | 30 | Lithium carboxylate | N,N'-methylenebisacrylamide 0.005 |
| D3 | Methacrylic acid-modified catechol structure | 15 | Acrylonitrile | 55 | / | / | Lithium carboxylate | N,N'-methylenebisacrylamide 0.005 |

| | | | | | | | | |
|---|---|---|---|---|---|---|---|---|
| "/" in the table indicates that none is added. | | | | | | | | |

### II. Button cell test:

A negative electrode active material, conductive carbon black, and a polymer were added into deionized water at a mass ratio of 80:10:10, and the resulting mixture was stirred to obtain a slurry. A 100 µm thick coating layer was made with a scraper, dried in a vacuum drying oven for 12 hours at 85°C, and then cut into circular plates with a diameter of 1 cm in a dry environment by using a punching machine. In a glove box, a button cell was assembled with a lithium metal plate as a counter electrode, a Ceglard composite membrane as a separator, and electrolyte added. LAND (LAND) series battery tester was used to conduct a charging and discharging test on the battery to test its charging and discharging capacities.

### III. Performance test of lithium-ion battery:

### (1) Method for measuring bonding force of electrode plate

The negative electrode active material, conductive carbon black, and a polymer were added into deionized water at a mass ratio of 80:10:10, and the resulting mixture was stirred to obtain a slurry. A 50µm thick coating layer was made with a scraper, and dried in a vacuum drying oven for 12 hours at 85°C. A resulting product was cut into a strip sample with a size of 2 cm × 10 cm, and a coating surface of the strip sample was aligned with and pasted on a double-sided adhesive tape (3M VBH4920) with a width of 2 cm, and was rolled back and forth 3 or 4 times with a 2 kg pressure roller. The strip sample was passed through a universal material testing machine under 180° uniaxial tensile mode at a clamp speed of 50 mm/min and elongated by 50 mm, and an average tensile force was calculated at that point.

### (2) Method for measuring gram capacity after charging at 0.1C:

The foregoing prepared button cell was tested with a LANHE test system. The process was as follows: The button cell was left standing for 2h, charged to 0.05 V at 0.05C, left standing for 1h, charged to 0.05 V at a constant current of 100 µA, left standing for 10min, and charged to 2 V at a constant current of 0.5C. Then the gram capacity was calculated.

### (3) Method for measuring capacity retention rate after 50 cycles:

The foregoing prepared button cell was tested with a LANHE test system. The process was as follows: The button cell was left standing for 30min, charged to 2 V at 0.05C, left standing for 10min, and discharged to 0.005 V at 0.05C. The process was repeated 3 times. The button cell was left standing for 10min, charged to 2 V at 0.2C, left standing for 10min, and discharged to 0.005 V at 0.2C. After this step was repeated 50 times, a ratio of a final capacity to an initial capacity was calculated.

### IV. Binder performance test:

### (1) Method for measuring glass transition temperature of binder:

The binder solution was dried for 24h at 70°C to obtain an adhesive film for testing. The test method was as defined in national standard GB/T 13464-2008. Test temperature range: -50°C to 200°C; and heating rate: 10°C/min.

### (2) Method for measuring viscosity of binder:

The solid content in the prepared binder solution was 4%, and the binder solution was used for testing. The test method was as defined by the cone-plate rotational viscometer part of national standard GB/T 10247-2008, with a constant test temperature of 25°C and a constant shear rate of 0.1 1/s.

The binders prepared in Examples 1 to 33 (that is, S1 to S33 in the table) and Comparative Examples 1 to 3 (that is, D1 to D3 in the table) were subject to the performance test. Test results are shown in Table 2.

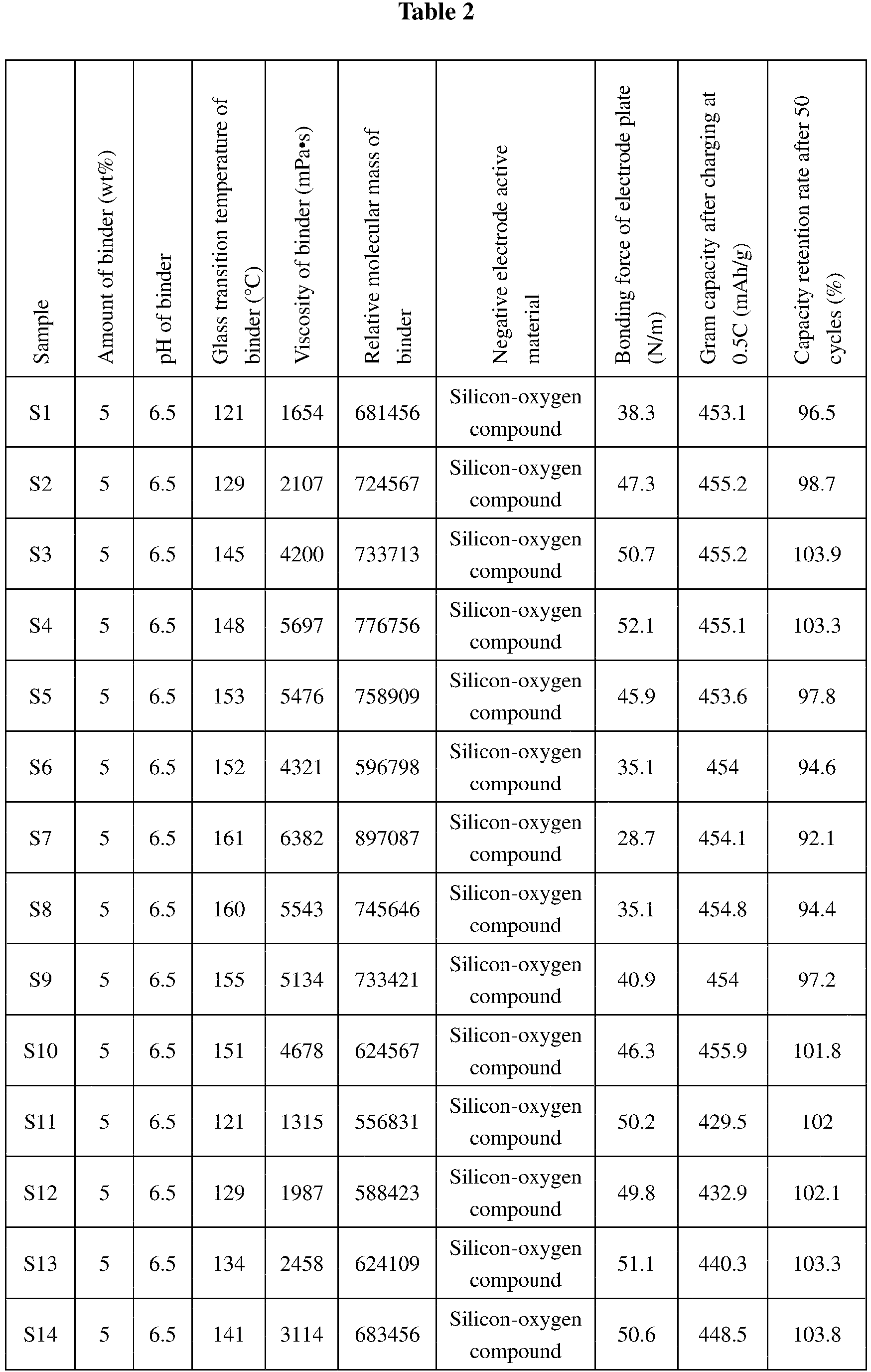

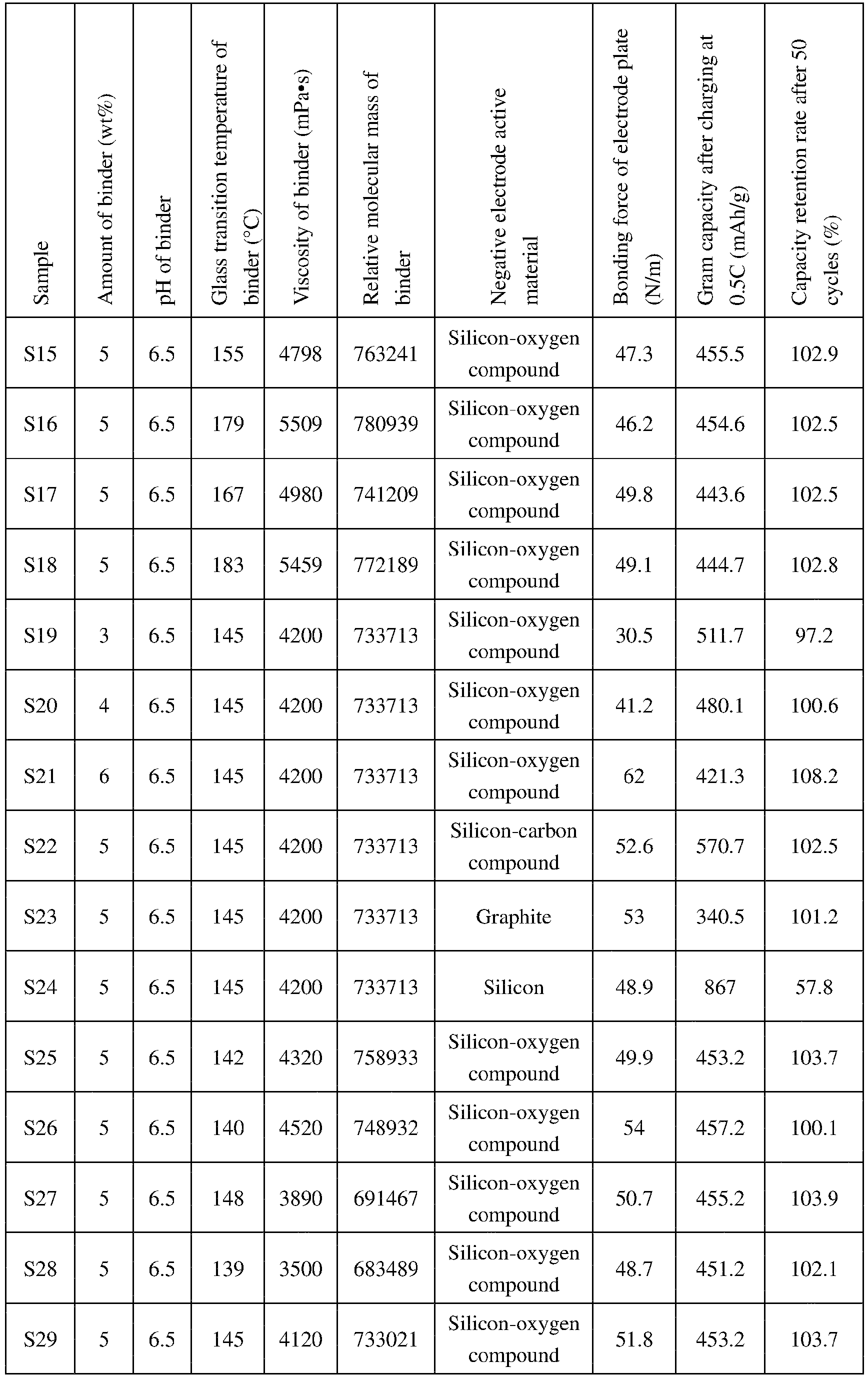

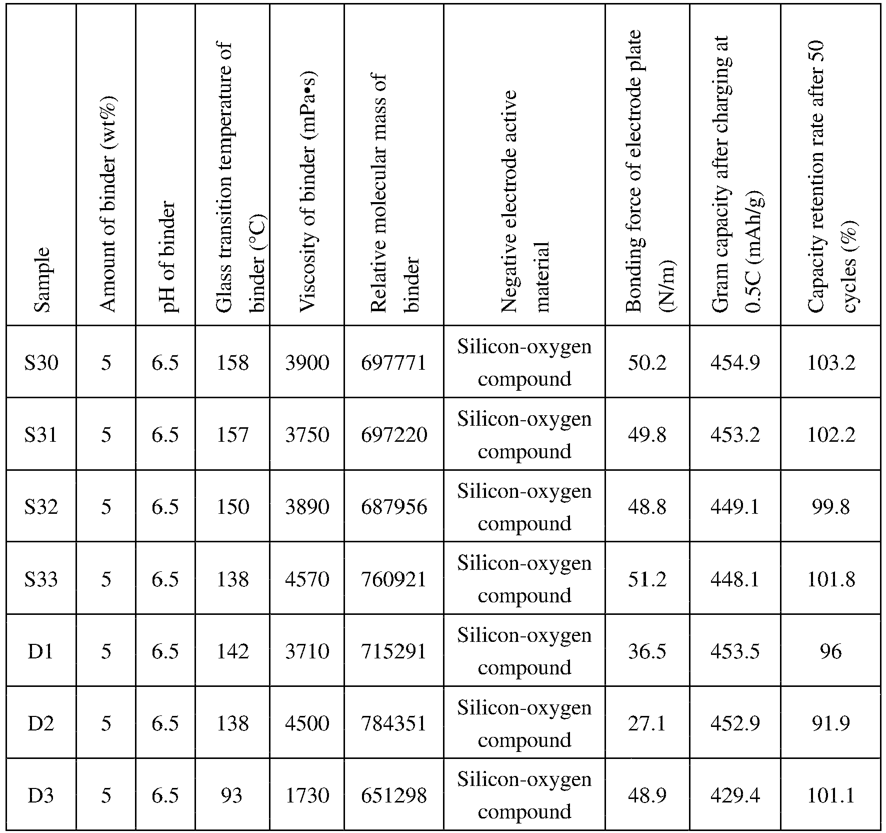

Based on the test data of Examples 1 to 6 in the foregoing Table 1 and Table 2, it can be seen that when the molar fraction of the structural unit represented by the formula III that includes a cyano group, the molar fraction of the structural unit represented by the formula II that includes an anionic group, and the anionic group in the formula II remain unchanged in the binder, as the molar fraction of the structural unit represented by the formula I increases, that is, the proportion of phenolic hydroxyl groups increases, the viscosity of the binder first increases and then decreases.

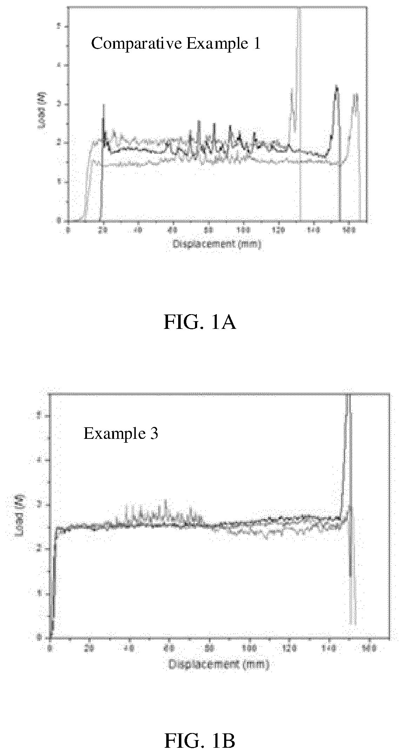

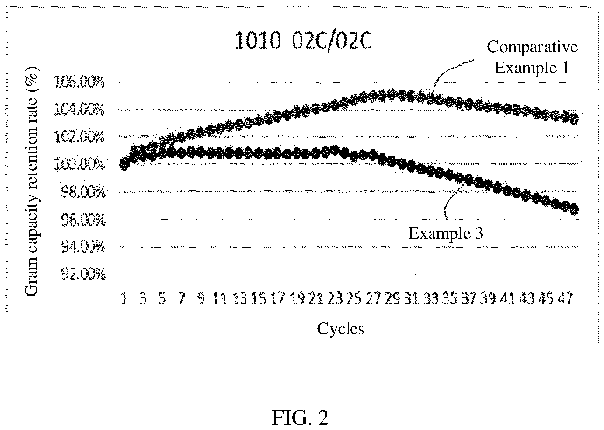

As shown in FIG. 1a, FIG. 1b, and FIG. 2, without the structural unit of the formula I added to the binder in Comparative Example 1, the bonding force of the binder is low, putting the electrode plate at the risk of peeling, and the capacity retention rate after 50 cycles is low. The capacity retention rate after cycling in Example 3 is higher than that in Comparative Example 1.

From the test data of Examples 7 to 10 and Example 3, it can be seen that when the molar fraction of the structural unit represented by the formula I, the molar fraction of the structural unit represented by the formula II that includes an anionic group, and the anionic group in the formula II remain unchanged in the binder, as the molar fraction of the structural unit represented by the formula III increases, that is, the proportion of the cyano group increases, the viscosity of the binder increases. However, when the molar fraction of the structural unit represented by the formula III is greater than 55mol%, the binder has a too high viscosity for it to be dissolved in water, reducing convenience of use of the binder. Preferably, the molar fraction of the structural unit represented by the formula III in the binder is 40mol% to 55mol%; and more preferably, the molar fraction of the structural unit represented by the formula III in the binder is 50mol% to 55mol%.

Further, from the test data of Comparative Example 2, it can be seen that without the structural unit of the formula III added to the binder, the bonding force of the binder is low, putting the electrode plate at the risk of peeling, and the capacity retention rate after 50 cycles is low. From the test data of Examples 11 to 16 and Example 3, it can be seen that when the molar fraction of the structural unit represented by the formula I, the molar fraction of the structural unit represented by the formula III, and the anionic group in the formula II remain unchanged in the binder, as the molar fraction of the structural unit represented by the formula II increases, that is, as the number of salinized anionic groups in the binder increases, the binder can provide more lithium ions during cycling of the battery, and also compete with the solvent around lithium ions to help with the desolvation of lithium ions, thus alleviating the obstruction against intercalation of lithium ions, and improving kinetic performance of the electrochemical apparatus. Preferably, the molar fraction of the structural unit represented by the formula II in the binder is 15mol% to 45mol%; and more preferably, the molar fraction of the structural unit represented by the formula II in the binder is 20mol% to 30mol%.

Further, from the test data of Comparative Example 3, it can be seen that without the structural unit of formula II added to the binder, the kinetic performance of the electrochemical apparatus is poor, and the gram capacity at high rates is low.

From the test data of Examples 3, 17, and 18, it can be seen that when different anionic groups are used in the formula II of the binder, the viscosity of the binder and the capacity retention rate of the battery are not much affected.

From the test data of Example 3 and Examples 19 to 21, it can be seen that the bonding force of the electrode plate and the capacity retention rate of the battery increase along with the increase of the binder content in the negative electrode plate.

From the test data of Example 3 and Examples 22 to 24, it can be seen that the bonding force of the electrode plate is little affected by the use of different negative electrode active materials in the negative electrode plate. This proves that the binder is suitable for silicon-oxygen, silicon-carbon, silicon, and graphite negative electrode materials.

From the test data of Examples 3, 25, and 26, it can be seen that different structural units represented by the formula I are added to the binder, namely methacrylic acid-modified catechol structure, acrylic acid-modified catechol structure, methacrylic acid-modified benzenetriol structure, and methacrylic acid-modified benzenetriol structure, and the changed structure of the structural unit represented by the formula I has little impact on the bonding force of the electrode plate. As compared with Comparative Example 1, all these structural units can effectively increase the bonding force of the electrode plate and the capacity retention rate of the battery.

From the test data of Examples 3, 27, 28, and 29, it can be seen that different structural units represented by the formula III are added to the binder, namely acrylonitrile, methacrylonitrile, 5-hexenenitrile, and allyl cyanide, the change structure of the structural unit represented by the formula III has little impact on the bonding force of the electrode plate. As compared with Comparative Example 2, all these structural units can effectively increase the bonding force of the electrode plate and the capacity retention rate of the battery.

From the test data of Examples 3 and Examples 30 to 32, it can be seen that different structural units represented by the formula III are added to the binder, namely lithium acrylate, lithium methacrylate, 2-acrylamide-2-methylpropanesulfonic acid, and p-styrene sulfonic acid, and the changed structure of the structural unit represented by the formula III has little impact on the bonding force of the electrode plate. As compared with Comparative Example 3, all these structural unit can effectively increase the bonding force of the electrode plate and the capacity retention rate of the battery.

From the test data of Examples 3 and 33, it can be seen that different functional monomers are added to the binder, namely N,N'-methylenebisacrylamide and polyethylene glycol diacrylate, and the use of different functional monomers has little impact on the bonding force of the electrode plate, all able to effectively increase the bonding force of the electrode plate and the capacity retention rate of the battery.

Although this application is disclosed above with preferred embodiments, these embodiments are not intended to limit the claims. Any person skilled in the art can make several possible changes and modifications without departing from the concept of this application. Therefore, the protection scope of this application shall be subject to the scope defined by the claims of this application.

## Claims

1. A binder, wherein the binder is a polymer comprising structural units represented by a formula I, a formula II, and a formula III: 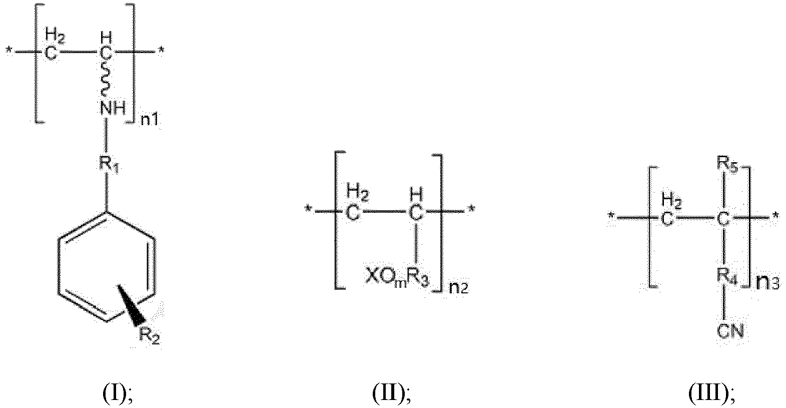
wherein R₁ is selected from any one of a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group;
R₂ is selected from a phenolic hydroxyl group and the number of phenolic hydroxyl groups is 2 to 5;
R₃ is selected from any one of C, S, N, or P; and X is selected from any one of Li, Na, or K;
R₄ and R₅ each are independently selected from any one of a hydrogen atom, a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₆-C₂₀ aryl group; and
n1, n2, and n3 each are independently an integer greater than zero.

2. The binder according to claim 1, wherein R₂ in the structural unit represented by the formula I is selected from any one of the following groups: 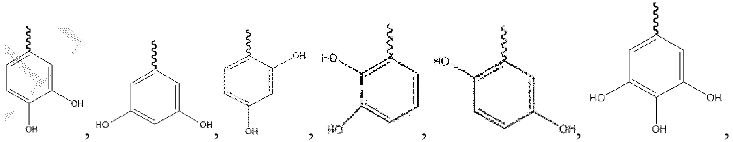 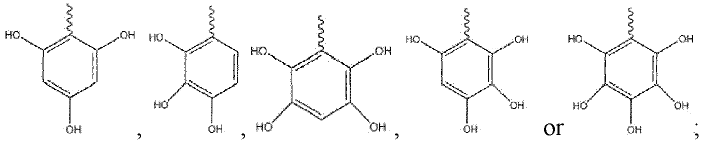 wherein 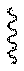 represents a binding site with an adjacent atom.

3. The binder according to claim 1, wherein
a molar fraction of the structural unit represented by the formula I in the binder is 5mol% to 30mol%;
a molar fraction of the structural unit represented by the formula II in the binder is 10mol% to 60mol%; and
a molar fraction of the structural unit represented by the formula III in the binder is 35mol% to 55mol%.

4. The binder according to claim 1, wherein the binder further comprises a functional monomer, a mass fraction of the functional monomer in the binder is 0wt% to 1wt%; and the functional monomer comprises at least one of an acrylamide derivative monomer or an acrylic derivative monomer.

5. The binder according to claim 4, wherein the acrylamide derivative monomer comprises at least one of acrylamide, N-methacrylamide, N-ethylacrylamide, N-butylacrylamide, or N,N'-methylenebisacrylamide.

6. The binder according to claim 4, wherein the acrylic derivative monomer comprises one or more selected from the group consisting of methyl acrylate, ethyl acrylate, n-butyl acrylate, tert-butyl acrylate, 2-ethylhexyl acrylate ester, cyclohexyl acrylate, isobornyl acrylate, hydroxyethyl acrylate, hydroxypropyl acrylate, vinyl acetate, methyl methacrylate, ethyl methacrylate, n-butyl methacrylate, 2-ethylhexyl methacrylate, cyclohexyl methacrylate, isobornyl methacrylate, hydroxyethyl methacrylate, hydroxypropyl methacrylate, glycidyl methacrylate, and polyethylene glycol) diacrylate.

7. The binder according to claim 1, wherein a pH of the binder is 3 to 12.

8. The binder according to any one of claims 1 to 7, wherein the binder satisfies at least one of the following characteristics a to c:
a: a glass transition temperature of the binder is 80°C to 200°C;
b: when a solid content of the binder is 4%, a viscosity of the binder is 1000 mPa•s to 20000 mPa•s; and
c: a relative molecular mass of the binder is in the range of 1000 to 5 million.

9. The binder according to claim 1, wherein the binder further comprises a solvent and the solvent is an organic solvent or water.

10. The binder according to claim 1, wherein the binder further comprises an additive and the additive comprises at least one of a dispersing agent, a leveling agent, a wetting agent, a defoaming agent, or a softening agent.

11. The binder according to claim 1, wherein the binder is applied to a negative electrode and/or a positive electrode of a lithium-ion battery.

12. An electrochemical apparatus, comprising a positive electrode plate, a negative electrode plate, a separator, and an electrolyte, wherein at least one of the positive electrode plate, the negative electrode plate, or the separator comprises the binder according to any one of claims 1 to 11.

13. The electrochemical apparatus according to claim 12, wherein the negative electrode plate comprises a negative electrode current collector and a negative electrode active substance layer, and a mass fraction of the binder in the negative electrode active substance layer is 3.0wt% to 6.0wt%.
